## Europäisches Patentamt

## European Patent Office

## Office européen des brevets

(11) Veröffentlichungsnummer: **0 195 289**
**B1**

(12) **EUROPÄISCHE PATENTSCHRIFT**

(45) Veröffentlichungstag der Patentschrift:
07.06.89

(51) Int. Cl.⁴: **B23K 7/00**

(21) Anmeldenummer: 86102617.7

(22) Anmeldetag: 28.02.86

(54) Verfahren zum Bearbeiten von Werkstücken, insbesondere zum thermischen Trennen von Profilen mit einem Schneidbrenner.

(30) Priorität: 22.03.85 DE 3510381

(43) Veröffentlichungstag der Anmeldung:
24.09.86 Patentblatt 86/39

(45) Bekanntmachung des Hinweises auf die Patenterteilung:
07.06.89 Patentblatt 89/23

(84) Benannte Vertragsstaaten:
AT BE CH FR GB IT LI NL SE

(56) Entgegenhaltungen:
DE-A- 1 815 500
DE-A- 3 208 412
DE-A- 3 331 101
DE-C- 3 136 394
DE-C- 3 331 844

"Trennen und Fügen", Heft 17, Oktober 1986, Messer Griesheim GmbH

(73) Patentinhaber: Oxytechnik Ges. für Systemtechnik mbH,
Frankfurter Strasse 10, D-6236 Eschborn 1(DE)

(72) Erfinder: Böhm, August, Parkstrasse 14,
D-6233 Kelkheim/Ts.(DE)
Erfinder: Lentz, Gerhard, In der Bitterwiese 13,
D-6272 Niedernhausen 3(DE)
Erfinder: Wilkens, Günter, Im Schmidtstück 8,
D-6233 Kelkheim/Ts.(DE)

(74) Vertreter: Roesner, Werner, MESSER GRIESHEIM GmbH
Patentabteilung Lärchenstrasse 137 Postfach 83 00 48,
D-6230 Frankfurt 83(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Bearbeiten von Werkstücken nach dem Oberbegriff des Anspruchs 1 und eine Vorrichtung zur Durchführung des Verfahrens nach dem Oberbegriff des Anspruchs 4.

Beim thermischen Trennen von Profilen wie U-, I-, Doppel-T-, T-, Winkel- und Wulstprofilen muß das Schneidwerkzeug an der Profilkante angestellt und anschließend entsprechend dem Profilverlauf geführt werden.

Aus der DE-A1 2 641 851 ist es bekannt, an einen Schneidbrenner zwei kapazitive Fühler anzuordnen. Die der Werkstückkontur entsprechenden Signale der Fühler werden als Regelsignale einem Brennerstellmotor zur Beibehaltung einer gleichbleibenden Schneidposition zugeführt.

Weiterhin ist aus der DE-C1 3 331 844 ein kombiniertes Bohr- und Schneidverfahren von Profilen bekannt, bei dem der Vorschubeinheit für die Profile eine Verschubmeßeinrichtung zugeordnet ist. Die den Vorschub messende Vorschubmeßeinrichtung arbeitet auf die Steuerung der Anlage.

Der Erfindung liegt die Aufgabe zugrunde, den Einfluß der Rüst- und Nebenzeiten, insbesondere der Brennerpositionierzeit zu verringern und somit die Geschwindigkeit eines Schweiß- oder Schneidvorganges, insbesondere eines Profilschneidvorganges, zu erhöhen bzw. die Zykluszeit zu verkürzen.

Diese Aufgabe wird bei einem gattungsgemäßen Verfahren durch die kennzeichnenden Merkmale des Anspruchs 1 und bei einer gattungsgemäßen Vorrichtung durch die kennzeichnenden Merkmale des Anspruchs 4 gelöst.

Um bei einem solchen Verfahren, das beim Schneiden oder Schweißen von unterschiedlichen Werkstückkonturen angewendet wird, den Schweiß- oder Schneidbrenner in einfacher Weise und ohne gesonderte Fühler bzw. Meßvorrichtungen automatisch an einem Soll-Anschnittspunkt zu positionieren, wird das Profil in einer Vorrichtung positioniert und der Brenner zum Anschnitt vorzugsweise auf den Nullpunkt der Vorrichtung programmiert. Selbstverständlich ist es auch möglich, den Brenner zum Anschnitt auf einen beliebigen Punkt der Werkstückkontur zu programmieren, wenn prozessbedingte Erfordernisse, wie z.B. die Schweiß- oder Schneidrichtung, die Schweißpositionen oder vorrichtungsbedingte Bauteile dies erfordern. Vorteilhaft ist die Lage dieses Nullpunktes bei allen Konturen in der Vorrichtung immer gleich.

Weiterbildungen der Erfindung sind in den Unteransprüchen angegeben.

Die mit der Erfindung erzielten Vorteile bestehen insbesondere in dem schnellen Erfassen der Ist-Werkstückkontur während der Längspositionierung des Profils in der Positioniervorrichtung. Durch die Ermittlung der Ist-Kontur des Profils in der Positioniervorrichtung, d. h. unabhängig von der Schweiß- oder Schneideinrichtung, werden vorteilhaft störanfällige Sensoren in Brennernähe vermieden und das Werkstück unter Berücksichtigung seiner Toleranzen geschnitten oder geschweißt. Weiterhin kann durch den fest vorgegebenen Anschnittpunkt der Brenner von einer bestimmten Parkposition zu dem Anschnittpunkt verfahren werden, während gleichzeitig das Profil in Längsrichtung positioniert und hierbei die Ist-Kontur des Profils ermittelt wird. Durch den gleichzeitigen Ablauf dieser Positioniervorgänge wird in der Praxis eine große Zeitersparnis erreicht. Kantensuchzyklen können entfallen.

Durch das flexible Fertigungssystem ist eine Einzelteilfertigung möglich. Dadurch ist die Zusammenfassung zu Losgrößen gleicher oder spiegelbildlicher Teile nicht nötig. Eine Zwischenlagerung kann entfallen. Mit der Einrichtung ist die Herstellung aller Schnittformen einschließlich Nahtvorbereitung, sowie Beschriften und Markieren möglich.

Durch die Abspeicherung von nur einer Werkstückkontur bzw. Grundschnittform je Profilart (variables Makro) wird eine einfache Programmierung erreicht, da die aktuellen Abmessungen gleichartiger Profilformen vom Meßsystem der Positioniervorrichtung ermittelt werden und der Brennerführung dienen.

Durch den vorzugsweise fest vorgegebenen Nullpunkt der Positioniervorrichtung ist der Schneidbereich immer an einer Stelle. Dadurch können Schrottstücke über Schrottkübel automatisch abgeführt und eine Absaugvorrichtung leicht angeordnet werden.

Durch die Verwendung eines Rechners, in dem die Variablen der programmierten Schnittform durch die gemessenen numerischen Werte der Profilkontur bestimmt werden, ist eine Ankopplung des Datenverkehrs an Großrechner bzw. CAD-Systeme möglich. Ein automatisches Schachteln der angegebenen Profilteile und damit geringster Verschnitt ist vorteilhaft möglich.

Ein Ausführungsbeispiel der Erfindung ist in der Zeichnung dargestellt und wird im folgenden näher beschrieben

Es zeigen

Fig. 1 eine Schemazeichnung der Einrichtung zur Durchführung der Erfindung;
Fig. 2 eine schematische Draufsicht der Profilschneideinrichtung;
Fig. 3 eine Seitenansicht der Meß- und Spannstation der Fig. 2 mit einem T-Profil.

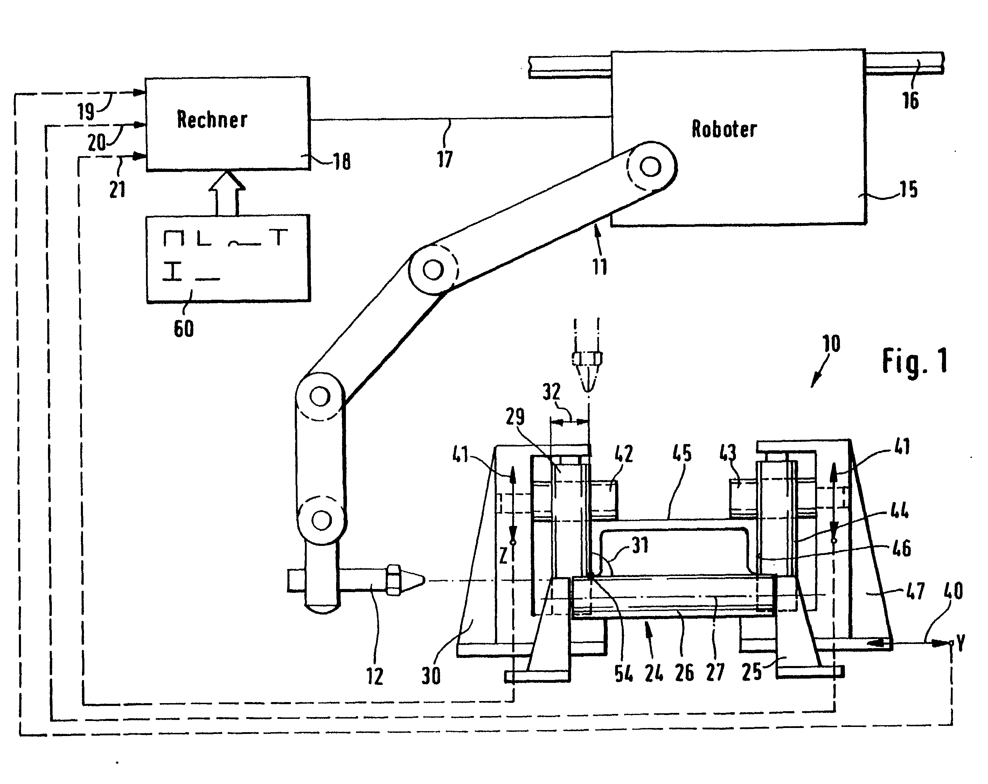

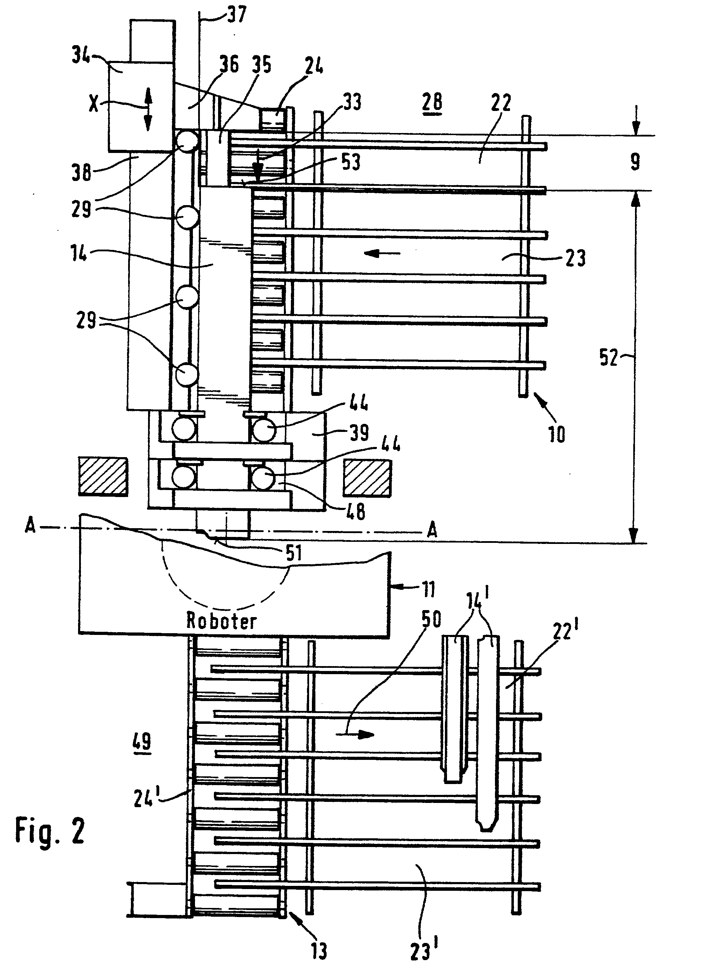

In den Figuren 1 und 2 ist eine Vorrichtung zur Durchführung des Verfahrens in ihrer Gesamtheit mit 10 bezeichnet. Das Verfahren wird anhand einer Profil-Schneidvorrichtung beschrieben, die im wesentlichen aus einem Roboter 11, vorzugsweise Gelenkarmroboter, an dem ein Schneidbrenner 12 befestigt ist und einer Einrichtung 13 zum Fördern und Positionieren der Profile 14 besteht.

Der Roboter ist als schienengebundene Hängebahn 15 ausgebildet. Hierzu weist der Roboter 11 einen nicht dargestellten elektromotorischen Linearantrieb auf, dessen Bewegung über eine Spindelmutter/Spindel übertragen wird. Linear geführt wird der Roboter durch über der Einrichtung 13 angeordnete Schienen 16. Der Roboter 11 ist über Leitungen 17 an einen Rechner 18 angeschlossen, der über Steuerleitungen 19, 20, 21 mit einer nicht näher dargestellten Wegmeßeinrichtung verbunden ist.

Selbstverständlich kann der Roboter auch in kartesischer Koordinatenbauweise ausgebildet und/oder stationär angeordnet sein.

Die Einrichtung 13 besteht aus einem Puffertisch 22, der über einen integrierten Querförderer 23, vorzugsweise einem Kettenförderer mit einem Rollgang 24 in Verbindung steht. Der Rollgang 24 besteht im grundsätzlichen Aufbau aus in einem Längsfundament 25 eingelegte Tragrollen 26 mit festen Achsen 27 als Trag- und Förderelement. Der Abstand der Tragrollen 26 ist hierbei so ausgelegt, daß das Profil mindestens auf zwei Tragrollen aufliegt.

An der oben beschriebenen Profilzuführseite 28 des Rollgangs 24 begrenzen feststehende Anschlagrollen 29, die dem Querförderer 23 entgegengesetzte Längsseite des Rollganges 24. Vorzugsweise sind die Anschlagrollen 29 in stationär angeordneten Lagertraversen 30 befestigt. Die stationär angeordneten Anschlagrollen 29 und die Tragrollen 26 des Rollgangs 24 bilden einen rechten Winkel 31. Hierzu reichen die Anschlagrollen 29 mit ihrem Durchmesser 32 in den durch die Tragrollen 26 gebildeten Längsförderweg 33 hinein.

Der Profilzuführseite 28 ist weiterhin ein Meßwagen 34 zugeordnet, der auf der dem Querförderer 23 gegenüberliegenden Seite des Rollganges 24 angeordnet ist. Der nicht näher dargestellte Meßwagen 34 weist einen eigenen Antrieb auf, mit dem er linear entsprechend dem Längsförderweg 33, im folgenden X-Richtung genannt, verfahrbar ist. An dem Meßwagen 34 ist ein in den Längsförderweg 33 hineinragender Förderanschlag 35 mittels einer Konsole 36 befestigt. Die Länge 9 des Förderanschlages 35 ist so ausgelegt, daß auch kleine Profilabschnitte bzw. Profilreste in eine noch zu beschreibende Positioniervorrichtung 39 eingeschoben werden können. Die Länge 9 entspricht ungefähr dem Abstand zwischen den zwei Meß- und Spannrollen 44 (Fig. 2). Vorzugsweise verfährt der Meßwagen 34 auf einer parallel zur X-Tangente 37 der Anschlagrollen 29 verlegten Führung 38.

Selbstverständlich sind auch andere Meß- und Fördersysteme in X-Richtung einsetzbar. So ist es beispielsweise möglich, das Profil 14 mit einer Schlepprolle oder mit einem Rollgang mit angetriebenen Rollen zu fördern,sowie die Längsabmessungen zu erfassen.

An den Rollgang 24 der Profilzuführseite 28 schließt sich eine Positioniervorrichtung 39 an, in der das Profil 14 gegen die als Bestimmelemente wirkenden Trag- und Anschlagrollen 26, 29 gespannt wird. Als Spannelemente dienen vorzugsweise horizontal (Pfeilrichtung 40) und vertikal (Pfeilrichtung 41) verfahrbare Spannrollen 42, 43, 44. In der Fig. 1 werden die Spannrollen 42 und 43 in Z-Richtung 41 solange verfahren, bis sie auf der Profiloberfläche 45 mit ihrem Rollenumfang aufliegen und somit das Profil 14 gegen die Tragrollen 26 spannen. Die bewegliche Spannrolle 44 wird in Y-Richtung 40 solange verfahren, bis sie an der Profilseitenfläche 46 anliegt und somit das Profil (14 gegen die Anschlagrollen 29 spannt.

Die Spannrollen 42, 43, 44 sind, wie in der Fig. 1 schematisch dargestellt, in Lagerböcken 47 angeordnet, wobei die in Z-Richtung 41 verfahrbaren Spannrollen 42, 43 in diesen Lagerböcken 47 verfahrbar angeordnet sind. Die Spannrolle 44 hingegen wird durch Verfahren des Lagerbockes 47 in Y-Richtung 40 bewegt.

Selbstverständlich ist es auch möglich, die Spannrollen 42, 43 mittels horizontal und vertikal verfahrbarer Lagerböcke zu positionieren. In einer weiteren Ausbildung werden die Spannrollen 42, 43, 44 mittels Hydraulikzylinder gegen die Profilflächen 45, 46 gespannt. Wie insbesondere aus Fig. 2 ersichtlich, können selbstverständlich auch mehrere Meß- und Spannrollen 42, 43, 44 hintereinander angeordnet werden.

Wie bereits oben erwähnt, sind die Spannrollen unter Zwischenschaltung eines nicht näher dargestellten Wegmeßsystems über die Steuerleitungen 19, 20, 21 mit dem Rechner 18 verbunden. Als Wegmeßsysteme können hierbei magnetische Systeme, wie z.B. Inductosyn, oder Impulsmaßstäbe verwendet werden. Vorzugsweise werden jedoch Winkelgeber zur absoluten Wegmessung der linearen Bewegungen der Spannrollen 42, 43, 44 bzw. des Lagerbockes eingesetzt.

In Richtung des Längsförderweges 33 hinter der Positioniervorrichtung 39 mit der integrierten Meßvorrichtung 48 liegt die fest vorgegebene Meßlinie A–A von der ausgeschnitten wird. Die Linie A–A liegt im Arbeitsbereich des Roboters 11, der wie bereits beschrieben, über der Einrichtung 13, insbesondere über der Positioniereinrichtung 39 angeordnet ist. Hinter der Linie A–A befindet, sich die Profilabführseite 49, die aus einem Rollgang 24 mit angetriebenen Rollen besteht, der ebenfalls über einen nicht näher dargestellten Querförderer 23' mit einem Puffertisch 22' in Wirkverbindung steht. Über den Rollgang 24' und den Querförderer 23' werden die geschnittenen Profile 14' zu dem Puffertisch 22' transportiert. Hierzu hebt der Querförderer 23' im vorderen Bereich des Rollgangs 24' ab und fördert das Profil 14' über nicht näher dargestellte Ketten zu dem Puffertisch 22' (Pfeilrichtung 50).

Die oben beschriebene Vorrichtung 10 arbeitet wie folgt:

Die zu schneidenden Profile 14, die in der Regel zwischen 10 bis 15 m lang sind, werden auf dem integrierten Puffertisch 22 und Querförderer 23 mit einem nicht näher dargestellten Flurförderzeug oder Kran abgelegt. Danach wird das zu schneidende Profil 14, das gemäß Fig. 1 als U-Profil ausgebildet ist, über das Kettensystem des Querförderers 23 in den Rollgang 24 gefördert. Das U-Profil 14 liegt hierbei mit seiner offenen Seite auf den Tragrollen 26 des Rollganges auf. Die Ketten des Querförderers 23 laufen bei diesem Fördervorgang solange, bis das Profil 14 an den festen senkrecht stehenden Anschlagrollen 29 anliegt. Dann senkt der Querförderer 23 im vorderen Bereich ab und legt das Profil 14 auf den Tragrollen 26 des Rollganges 24 ab. Dabei ist das Profil 14 durch die Tragrollen 26 und die Anschlagrollen 29 in seiner Lage bestimmt.

Handelt es sich bei dem zu schneidenden Profil 14 um ein symmetrisch aufgebautes Profil, wie ein Flach-, U-, Doppel-T-, oder Wulstprofil, so schiebt der Meßwagen 34 das Profil 14 in X-Richtung 33 sofort mit seinem Anfang 51 über die Meßlinie A - A in eine erste Schneidposition.

Dem Antrieb des Meßwagens 34 wird hierbei zur Positionierung des Profils 14 in die erste Schneidposition die absolute Profillänge 52 vorgegeben. Dies ist vorteilhaft dadurch möglich, daß die verwendeten Profile 14 beispielsweise eine Länge von 10,5 m haben und aus einem Profil Profilabschnitte mit jeweils 2 m Länge geschnitten werden.

Durch die Vorgabe von beispielsweise 10 m verfährt der Meßwagen 34 ausgehend von einer fest vorgegebenen Parkposition das Profil derart in X-Richtung 33, daß die Profillänge zwischen Meßlinie A - A und Profilende 53 10 m beträgt.

Passiert der Profilanfang 51 die Positionier- und Meßvorrichtung 39, 48, so fährt die erste Meß- und Spannrolle 44 in Y-Richtung 40 auf Spanndruck. Danach fahren gleichzeitig die Meß- und Spannrolle 42 auf der festen Anschlagseite und die Meß- und Spannrolle 43 auf der beweglichen Spannseite in Z-Richtung 41 auf Spanndruck.

Vorzugsweise ist die Rolle 43 nur als Spannrolle ausgebildet.

Hierbei ist, wie bereits oben beschrieben, jeder Rolle 42, 43, 44 und/oder jedem Lagerbock 47 ein Weggeber für die absolute Messung der Linearbewegung zugeordnet. Die Weggeber sind in einem festen Abstand zum Maschinennullpunkt 54 (Fig. 1) derart eingestellt, daß die Meß- und Spannrollen 42, 43, 44 und/oder die Lagerböcke 47 immer von einem fest vorgegebenen Null-Referenzpunkt aus verfahren.

In der Fig. 1 ist der an dem Roboter 11 befestigte Schneidbrenner 12 schematisch in Anschnittstellung an dem Maschinennullpunkt 54 dargestellt. Hierbei wurde aus Übersichtsgründen der Schneidbrenner 12 in einem größeren Abstand zum Nullpunkt 54 dargestellt.

Selbstverständlich ist es auch möglich, den Schneidbrenner 12 auf einem beliebigen Anschnittpunkt an der Werkstückkontur zu programmieren.

Die so ermittelten Meßwerte werden dem übergeordneten Rechner 18 gemeldet, der die Variablen der vorher programmierten Schnittform bzw. die Werkstückkontur, die in der Fig. 1 durch Symbole 60 dargestellt sind, durch die gemessenen numerischen Werte bestimmt und dem Roboter 11 weitergemeldet. Der Roboter verfügt so nach dem Meßvorgang über die exakte geometrische Form des zu schneidenden Teils.

Nach dem Spann-/Meßvorgang führt der Roboter 11 den ihm vorgegebenen Schnitt im Bereich der Meßlinie A - A aus. Hierbei wird der Schneidbrenner 12 entsprechend der gemessenen Werkstückkontur und dem als Makro oder Unterprogramm in dem Rechner 18 abgelegten Schneidbild geführt.

Unter Schneidbild werden hierbei die im Fertigungsprogramm vorkommenden, von einem linearen Trennschnitt abweichenden Schneidoperationen verstanden, wie z. B. Nahtvorbereitungsschnitte, Schrägschnitte, Ausschnitte, Kreisschnitte usw.

Darauf folgt die Positionierung des Profils 14 über den Meßwagen 34 in X-Richtung 33. Dabei wird entsprechend dem obigen Beispiel das Profil 14 zwei Meter weiter bewegt.

Dabei brauchen die Meß- und Spannrollen 42, 43, 44 während dieser Längenpositionierung nicht zurückgefahren werden; somit verfügt der Rechner 18 sofort nach dem Stoppen des Längsantriebes bereits wieder über die aktuelle Werkstückkontur bzw. Schnittform des Profiles 14 für den nächsten Schnitt.

Vorteilhaft wird durch die jeweilige Messung der Werkstückkontur eine schnelle und genaue Positionierung des Schneidbrenners 12 auch bei großen Werkstücktoleranzen ermöglicht. Hierbei wird eine Positioniergenauigkeit von kleiner +/- 0,5 mm erreicht, die insbesondere beim Anschneiden mit einem Autogenschneidbrenner und dem hierbei erforderlichen Heizvorgang zu einem fehlerfreien und sauberen Anschnitt führt.

Nach dem zweiten Schnitt wird das fertig geschnittene Profil 14' über den Rollgang 24' zu dem abführseitigen Querförderer 23' gebracht. Von diesem werden dann die fertigen Profile, wie bereits beschrieben, zu dem Puffertisch 22' gefördert.

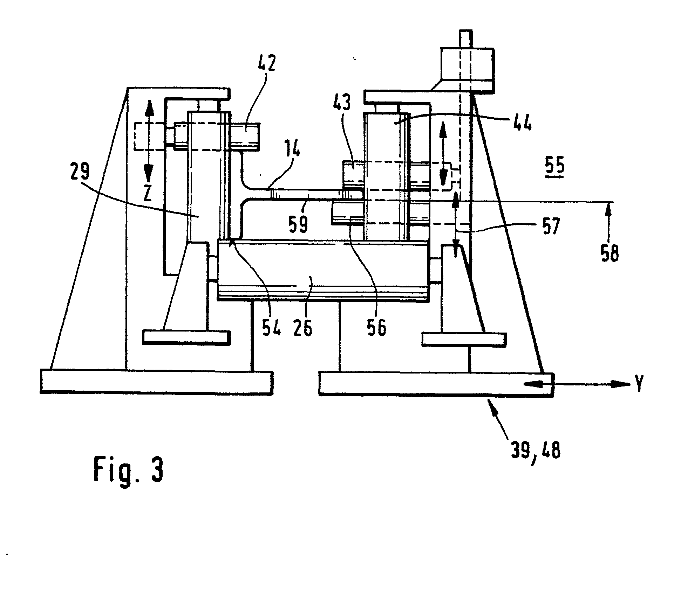

In der Fig. 3 ist schematisch eine Schnittdarstellung durch die Positionier- und Meßvorrichtung 39, 48 dargestellt, in der ein unsymmetrisches Profil 14, beispielsweise ein T-Profil, gespannt und gemessen wird. Für gleiche Bauteile wurden in der Zeichnung die gleichen Bezugsziffern eingetragen. Der Profilschneidvorgang erfolgt wie bereits oben beschrieben. Unterschiedlich zu der oben beschriebenen Ausführungsform der Positionier- und Meßvorrichtung 39, 48 für symmetrische Profile fährt bei der Bearbeitung von Winkel- oder T-Profilen zuerst auf der Losseite 55 eine zusätzliche Stützrolle 56 bis auf ein vorgegebenes Maß 58 in Z-Richtung 57. Durch die Stützrolle 56 wird der freie Profilschenkel 59 in eine waagerechte Position gefahren.

Die Stützrollen sind hierbei bevorzugt zwischen den Tragrollen 26 des Rollganges 24 angeordnet, so daß der Profilschenkel 59 über die gesamte Profillänge 52 in einer waagerechten Position unterstützt ist. Vorzugsweise sind die Stützrollen 56 zwischen den Tragrollen 26 des Rollganges 24 versenkbar angeordnet, so daß auf dem gleichen Rollgang 24 auch die in Fig. 1 dargestellten symmetrischen Profile, wie beispielsweise das U-Profil, bearbeitet werden können.

Beim oben beschriebenen Ausführungsbeispiel sind die Werkstücke Profile 14, wie U-, I-, Doppel-T, T-, Winkel- oder Wulstprofile.

Wird das erfindungsgemäße Verfahren und die Vorrichtung zum Schweißen benutzt, so können die Werkstücke selbstverständlich aus beliebig geformten Einzelteilen aufgebaut sein, die in einer Positioniervorrichtung gehalten und festgespannt werden. Den beweglichen Spannelementen sind dann Weggeber zugeordnet, die die tatsächlichen Abmessungen des aus beliebig geformten Einzelteilen aufgebauten Werkstückes in der Vorrichtung toleranzfrei erfassen und der Schweißbrennersteuerung die Abmessungen eingeben.

Anschließend kann das Werkstück entsprechend dem gespeicherten Schweißbild geschweißt werden. Unter Schweißbild werden hierbei alle die Brennerbewegungen verstanden, die im Fertigungsprogramm vorkommen und nicht von dem Meßsystem der Vorrichtung erfaßt werden, wie z.B. Pendelung des Schweißbrenners.

Vorteilhaft könnten dabei neben den Abmessungen des Werkstückes auch Veränderungen am Werkstück während des Schweißvorganges, wie z.B. Verwerfungen, Schrumpfungen erfaßt und der Steuerung zur Korrektur der Schweißbahn eingegeben werden.

Durch das Verfahren nach der Erfindung wird weiterhin ein automatisches Zuführen und Positionieren der Rohprofile und ein automatischer Abtransport der Fertigteile erreicht.

## Patentansprüche

1. Verfahren zum thermischen Trennen von Profilen (14) mit einem Schneidbrenner (12), der von einer Steuerung (18) entsprechend der Werkstückkontur nachgeführt wird, dadurch gekennzeichnet, daß in der Steuerung (18) die Werkstückkontur (45, 46) variabel abgespeichert wird und ferner mittels Meßvorrichtungen (48) am Profil (14) die absoluten Meßwerte des zu bearbeitenden Profils (14) erfaßt und diese Meßwerte der Steuerung (18) zur Bestimmung der tatsächlichen Werkstückkontur und zur Ermittlung der Steuersignale für den Brenner (12) zugeführt werden.

2. Verfahren nach Anspruch 1, dadurch gekennzeichnet, daß in der Steuerung (18) die im Fertigungsprogramm vorkommenden variablen Schneidbilder gespeichert und durch die gemessenen numerischen Werte bestimmt werden.

3. Verfahren nach Anspruch 1 oder 2, dadurch gekennzeichnet, daß das Profil (14) durch mindestens zwei senkrecht zueinander angeordnete Rollen (26, 29) in seiner Lage bestimmt wird und der Brenner (12) zum Anschnitt relativ zu einem im Schnittpunkt der Rollen liegenden Nullpunkt (54) programmiert wird.

4. Vorrichtung zum Trennen von Profilen (14) mit einer Schneidbrennereinrichtung, die eine Führungseinrichtung mit daran angeordnetem Brenner (12) aufweist und einer Steuerung (18), dadurch gekennzeichnet, daß die Führungseinrichtung als Roboter (11) ausgebildet ist und daß das Profil (14) in einer Positioniervorrichtung (39) gehalten ist, die eine Meßvorrichtung (48) aufweist, welche mit der Steuerung (18) für den Brenner (12) in Verbindung steht.

5. Vorrichtung nach Anspruch 4, dadurch gekennzeichnet, daß die Positioniervorrichtung aus einem Rollengang (24) mit rechtwinklig zu den Tragrollen (26) des Rollenganges angeordneten Anschlagrollen (29) besteht.

6. Vorrichtung nach Anspruch 4 oder 5, dadurch gekennzeichnet, daß in der Positioniervorrichtung (39) bewegliche Spannrollen (42, 43, 44) vorgesehen sind, die das Profil (14) gegen die Anschlagrolle (29) und/oder die Tragrolle (26) spannen.

7. Vorrichtung nach einem der Ansprüche 4 bis 6, dadurch gekennzeichnet, daß die Spannrollen (42, 43, 44) mit Wegmeßeinrichtungen gekoppelt sind, die in einem festen Abstand zum Nullpunkt (54) angeordnet sind.

8. Vorrichtung nach einem der Ansprüche 4 bis 7, gekennzeichnet durch einen Rollengang (24) mit fest angeordneten Anschlagrollen (29) sowie einer Positioniervorrichtung (39) mit integrierter Meßvorrichtung (48) in denen in Y- und Z-Richtung (40, 41) verfahrbare Spann- und Meßrollen (42, 43, 44) vorgesehen sind, denen eine Wegmeßeinrichtung zugeordnet ist, die über Steuerleitungen (19, 20, 21) mit einem Rechner (18) verbunden sind, der über einen Roboter (11) einen Brenner (12) steuert.

9. Vorrichtung nach einem der Ansprüche 4 bis 8, dadurch gekennzeichnet, daß beim Schneiden eines unsymmetrischen Profiles (14) auf der Losseite (55) mindestens eine bewegliche Stützrolle (56) in Z-Richtung (57) verfahrbar angeordnet ist.

## Claims

1. Process for the thermal separation of profiles (14) with a cutting torch (12) which is automatically guided by a control (18) in accordance with the workpiece contour, characterized in that the workpiece contour (45, 46) is variably stored in the control (18) and, furthermore, the absolute measured values of the profile (14) to be worked are acquired by means of measuring devices (48) on the profile (14) and these measured values are fed to the control (18) to determine the actual workpiece contour and to establish the control signals for the torch (12).

2. Process according to Claim 1, characterized in that the variable cutting designs occurring in the production program are stored in the control (18) and determined by the measured numerical values.

3. Process according to Claim 1 or 2, characterized in that the profile (14) is determined in its position by at least two rollers (26, 29), arranged perpendicular to each other, and the torch (12) is programmed for the starting cut relative to a zero point (54) lying at the point of intersection of the rollers.

4. Apparatus for the separation of profiles (14), with a cutting torch device, which has a guide device with torch (12) arranged on it, and with a control (18), characterized in that the guide device is designed as a robot (11) and in that the profile (14) is held in a positioning device (39), which has a measuring device (48) which is in connection with the control (18) for the torch (12).

5. Apparatus according to Claim 4, characterized in that the positioning device consists of a roller table (24) with tappet rollers (29) arranged at right angles to the carrying rollers (26) of the roller table.

6. Apparatus according to Claim 4 or 5, characterized in that moveable tensioning rollers (42, 43, 44), which clamp the profile (14) against the tappet roller (29) and/or the carrying roller (26), are provided in the positioning device (39).

7. Apparatus according to one of Claims 4 to 6, characterized in that the tensioning rollers (42, 43, 44) are coupled to displacement measuring devices, which are arranged at a fixed distance from the zero point (54).

8. Apparatus according to one of Claims 4 to 7, characterized by a roller table (24) with fixedly arranged tappet rollers (29) as well as a positioning device (39) with integrated measuring device (48), in which tensioning and measuring rollers (42, 43, 44), moveable in Y and Z direction (40, 41) are provided, to which a displacement measuring device is assigned, which are connected via control lines (19, 20, 21) to a computer (18), which controls a torch (12) via a robot (11).

9. Apparatus according to one of Claims 4 to 8, characterized in that, during the cutting of an unsymmetrical profile (14), at least one moveable supporting roller (56) is arranged moveably in Z direction (57) on the batch side (55).

**Revendications**

1. Procédé de découpage thermique de profilés (14) à l'aide d'un chalumeau de découpage (12) guidé par une commande (18) en fonction du contour de la pièce, procédé caractérisé en ce qu'on met en mémoire dans la commande (18), de manière variable le contour de la pièce (45, 46) et en outre à l'aide de dispositifs de mesure (48), on détecte sur le profilé (14), les grandeurs de mesure absolues du profilé (14) à traiter et on applique ces grandeurs de mesure à la commande (18) pour déterminer le contour réel de la pièce ainsi que pour fournir les signaux de commande au chalumeau (12).

2. Procédé selon la revendication 1, caractérisé en ce que les images de découpage variable intervenant dans le programme de fabrication sont mises en mémoire dans la commande (18) et sont déterminées par des grandeurs numériques mesurées.

3. Procédé selon la revendication 1 ou 2, caractérisé en ce que la position du profilé (14) est déterminée par au moins deux rouleaux (26, 29) perpendiculaires l'un par rapport à l'autre et le chalumeau (12) est programmé pour le découpage par rapport à un point zéro (54) situé au point d'intersection des rouleaux.

4. Dispositif pour découper des profilés (14) à l'aide d'un dispositif de découpage à chalumeau qui comporte une installation de guidage équipée d'un chalumeau (12) et d'une commande (18), dispositif caractérisé en ce que l'installation de guidage est constituée par un robot (11) et en ce que le profilé (14) est maintenu dans un dispositif de positionnement (39) qui comporte un dispositif de mesure (48) relié à la commande (18) du chalumeau (12).

5. Dispositif selon la revendication 4, caractérisé en ce que le dispositif de positionnement se compose d'un chemin à rouleaux (24) avec des rouleaux de butée (29) perpendiculaires aux rouleaux de support (26) du chemin à rouleaux.

6. Dispositif selon les revendications 4 ou 5, caractérisé par des rouleaux de serrage (42, 43, 44), mobiles dans le dispositif de positionnement (39), rouleaux qui serrent le profilé (14) contre les rouleaux de butée (29) et/ou les rouleaux de support (26).

7. Dispositif selon l'une des revendications 4 à 6, caractérisé en ce que les rouleaux de serrage (42, 43, 44) sont couplés à des dispositifs de mesure de course situés à une distance fixe du point zéro (54).

8. Dispositif selon l'une des revendications 4 à 7, caractérisé par un chemin à rouleaux (24) avec des rouleaux de butée (29), fixes ainsi qu'un dispositif de positionnement (39) avec un dispositif de mesure (48) intégré, comportant des rouleaux de serrage et de mesure (42, 43, 44) mobiles dans la direction Y et dans la direction Z (40, 41), rouleaux auxquels est associée une installation de mesure de course elle-même reliée par des lignes de commande (19, 20, 21) à un calculateur (18) qui commande un chalumeau (12) par l'intermédiaire d'un robot (11).

9. Dispositif selon l'une des revendications 4 à 8, caractérisé en ce que pour découper un profilé asymétrique (14), il est prévu au moins un rouleau d'appui (56) mobile dans la direction Z (57) pour venir contre le côté libre (55) du profilé.

Fig. 1

Fig. 2

Fig. 3